# EUROPEAN PATENT APPLICATION

(11) **EP 4 712 491 A1**
(43) Date of publication of application: **18.03.2026**
(21) Application number: 24860241.9
(22) Date of filing: 07.08.2024
(51) Int. Cl.: H04N 21/44, H04N 21/431, H04N 21/433, H04L 47/30, H04L 47/24

(54) **DISPLAY DEVICE AND DISPLAY METHOD THEREFOR**

(30) Priority: 30.08.2023 KR 20230114516; 16.10.2023 KR 20230137996
(71) Applicant: Samsung Electronics Co., Ltd., Suwon-si, Gyeonggi-do 16677 (KR)
(72) Inventor: KIM, Kyumin, Suwon-si Gyeonggi-do 16677 (KR); KIM, Kyungwoo, Suwon-si Gyeonggi-do 16677 (KR); KIM, Namhyun, Suwon-si Gyeonggi-do 16677 (KR); KIM, Hoseon, Suwon-si Gyeonggi-do 16677 (KR)
(74) Representative: Appleyard Lees IP LLP
(86) International application number: PCT/KR2024/011738
(87) International publication number: WO 2025/048320

(57) **Abstract**

A display device is disclosed. The device comprises: a plurality of buffers; a display; a communication unit for communicating with a transmission device; a memory; and a processor. The processor controls the display such that, when a multi-view function is selected, pieces of data of a plurality of content sources connected to the transmission device are received and stored in each of the plurality of buffers, and thus a plurality of content screens is displayed on a multi-view screen. The processor transmits a control signal for adjusting a transmission order of data to the transmission device when a buffer having a storage level that is less than a preset reference level is identified from among the plurality of buffers. Therefore, multi-view may be effectively performed.

## Description

### [Technical Field]

The present disclosure relates to a display device and a display method therefor, and more particularly, to a display device for receiving data of a plurality of contents and displaying the plurality of contents on a screen, and a display method therefor.

### [Background Art]

With the development of electronic technology, display devices such as televisions (TVs) are used in most households.

Recently used display devices are capable of displaying contents from various content sources. For example, such display devices may display various screens such as broadcast content screens received through a set-top box, video-on-demand (VOD) content screens received through the Internet, game screens executed by a game player, and personal computer (PC) screens.

To use contents from various content sources, a display device is required to be connected to each content source, which inevitably exposes a plurality of connection lines to the outside. Accordingly, a technology has been developed to implement a configuration in which a plurality of content sources are connected to one transmission device and the transmission device transmits contents provided from the respective content sources to a display device.

In such a situation, a need has arisen for a technology capable of efficiently receiving and processing contents of a plurality of content sources through the transmission device.

### [Disclosure of Invention]

### [Solution to Problem]

According to at least one embodiment of the present disclosure, a display device includes: a plurality of buffers; a display; a communication unit configured to perform communication with a transmission device; a memory storing at least one instruction; and a processor configured to control an operation of the display device based on the at least one instruction, wherein the processor is configured to: receive, from the transmission device through the communication unit, data of a plurality of contents respectively provided from a plurality of content sources connected to the transmission device, and store the data respectively in the plurality of buffers if a multi-view function is selected; generate a plurality of content screens by respectively processing the data stored in the plurality of buffers; control the display to display a multi-view screen including the plurality of content screens; and transmit, to the transmission device through the communication unit, a control signal for adjusting a transmission order of the data of the plurality of contents if a buffer having a storage level lower than a predetermined reference level is identified among the plurality of buffers.

According to at least one embodiment of the present disclosure, a display method includes: receiving, from a transmission device connected to the display device, data of a plurality of contents respectively provided from a plurality of content sources connected to the transmission device, and storing the data respectively in the plurality of buffers; generating a plurality of content screens by respectively processing the data stored in the plurality of buffers, and displaying a multi-view screen including the plurality of content screens; and transmitting, to the transmission device, a control signal for adjusting a transmission order of the data of the plurality of contents if a buffer having a storage level lower than a predetermined reference level is identified among the plurality of buffers.

According to at least one embodiment of the present disclosure, disclosed is a non-transitory computer-readable storage medium storing program codes for executing a display method. The method includes: receiving, from a transmission device connected to a plurality of content sources, data of a plurality of contents respectively provided from the plurality of content sources, and storing the data respectively in a plurality of buffers; generating a plurality of content screens by respectively processing the data stored in the plurality of buffers; displaying the plurality of content screens; and controlling the transmission device to adjust a transmission order of the data of the plurality of contents if a buffer having a storage level lower than a predetermined reference level is identified among the plurality of buffers.

### [Brief Description of Drawings]

FIG. 1 is a diagram illustrating an operation of a display device according to at least one embodiment of the present disclosure.
FIG. 2 is a block diagram illustrating a configuration of the display device according to at least one embodiment of the present disclosure.
FIG. 3 is a diagram illustrating a software structure stored in the display device according to at least one embodiment of the present disclosure.
FIG. 4 is a diagram illustrating an operation of the display device according to at least one embodiment of the present disclosure.
FIGS. 5 to 7 are diagrams illustrating a transmission order of data adjusted by the display device according to at least one embodiment of the present disclosure.
FIG. 8 is a block diagram illustrating a configuration of a transmission device according to at least one embodiment of the present disclosure.
FIG. 9 is a block diagram illustrating a detailed configuration of the display device according to at least one embodiment of the present disclosure.
FIG. 10 is a diagram illustrating a method of adjusting the number of content screens in a multi-view screen according to at least one embodiment of the present disclosure.
FIGS. 11 and 12 are flowcharts illustrating a display method for a display device according to at least one embodiment of the present disclosure.

### [Mode for Invention]

General terms that are currently widely used are selected as terms used in various embodiments of the present disclosure in consideration of their functions in the present disclosure, and may be changed based on the intention of those skilled in the art or a judicial precedent, the emergence of a new technique, or the like. In addition, in a specific case, terms arbitrarily chosen by an applicant may exist. In this case, the meanings of such terms are mentioned in detail in corresponding descriptions of the present disclosure. Therefore, the terms used in the present disclosure need to be defined on the basis of the meanings of the terms and the contents throughout the present disclosure rather than simple names of the terms.

In the present disclosure, the expression such as "have", "may have", "include", or "may include", indicates the presence of a corresponding feature (e.g., a numerical value, a function, an operation, or a component such as a part), and does not exclude the presence of an additional feature.

An expression such as "at least one of A or/and B" may indicate either "A or B", or "both of A and B."

Expressions such as "first" and "second", used in the present disclosure may indicate various components regardless of the order or importance of the components. The expression is used only to distinguish one component from another component, and does not limit the corresponding component.

If any component (for example, a first component) is mentioned to be "(operatively or communicatively) coupled with/to" or "connected to" another component (for example, a second component), it should be understood that the any component is directly coupled to another component or may be coupled to another component through yet another component (for example, a third component).

A term of a singular number may include its plural number unless explicitly indicated otherwise in the context. It should be understood that a term "include" or "have" used in this application specifies the presence of features, numerals, steps, operations, components, parts, or combinations thereof, which are mentioned in the specification, and does not preclude the presence or addition of one or more other features, numerals, steps, operations, components, parts, or combinations thereof.

In the present disclosure, a "module" or a "~er/~or" may perform at least one function or operation, and be implemented by hardware, software, or a combination of hardware and software. In addition, a plurality of "modules" or a plurality of "~ers/~ors" may be integrated in at least one module and be implemented by the processor (not shown) except for a "module" or a "~er/or" that needs to be implemented by a specific hardware.

In the specification, a term such as a "user" may refer to a person who uses an electronic apparatus or an apparatus (e.g., an artificial intelligence electronic apparatus) which uses an electronic apparatus.

Hereinafter, an embodiment of the present disclosure is described in detail with reference to the accompanying drawings.

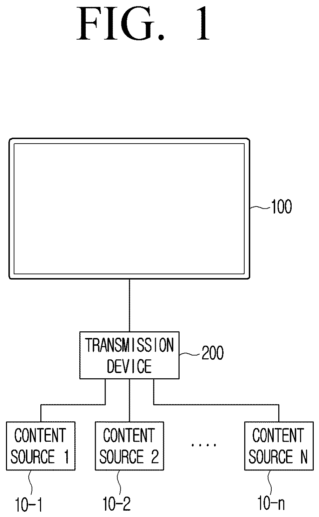

FIG. 1 is a diagram illustrating an operation of a display device according to at least one embodiment of the present disclosure.

Referring to FIG. 1, a display device 100 may be connected to a transmission device 200. The transmission device 200 may be connectable to at least one content source. FIG. 1 illustrates a case where the transmission device 200 is connected to a total of n content sources 10-1 to 10-n. The content sources may include various devices such as a personal computer (PC), a laptop PC, a smartphone, a tablet PC, a set-top box, a cable, a media player, and a game console.

The transmission device 200 may transmit, to the display device 100, data of a plurality of contents provided from the various types of content sources 10-1 to 10-n.

The display device 100 may process data provided through the transmission device 200 or data received through other sources and display the processed data.

The display device 100 may be implemented as a television (TV). However, the present disclosure is not necessarily limited thereto, and the display device 100 may also be applied to any device having a display function, such as a smartphone, a tablet PC, a video wall, a large format display (LFD), digital signage, a digital information display (DID), or a projector.

If a user selects one of the content sources connected to the transmission device 200 and selects one of contents provided from the selected content source, the display device 100 may transmit a control signal to the transmission device 200. The transmission device 200 may receive data of the content from the content source selected by the user according to the control signal and then transmit the data to the display device 100. The display device 100 may receive the data transmitted from the transmission device 200 and may playback and output the data.

Meanwhile, the user may select a multi-view function. The multi-view function refers to a function of displaying a plurality of content screens on an entire screen.

If the multi-view function is executed, the display device 100 may receive the data of the plurality of contents respectively provided from the plurality of content sources connected to the transmission device 200. The display device 100 may allocate buffers respectively to the content sources. The display device may detect data of the respective contents stored in the plurality of buffers in predetermined size units, playback the data respectively, and generate the plurality of content screens. The display device may display the plurality of content screens at predetermined positions on one screen based on a predetermined layout.

As illustrated in FIG. 1, if data of the plurality of content sources 10-1 to 10-n are received from one transmission device 200, a difference in storage levels of the plurality of buffers may occur due to various causes such as a poor connection state between the transmission device 200 and the display device 100, a poor communication network state between the transmission device 200 and the content source, a poor state of each content source, a difference in data sizes of the contents, or a difference in processing unit sizes.

If the storage level of a buffer falls to a predetermined level or lower, the display device 100 may fail to properly process the data of the corresponding buffer. In such a case, a conventional display device is required to repeat a previous scene or temporarily mute the screen. Accordingly, the user may be inevitably disturbed in viewing the corresponding content screen.

If it is determined that insufficient data is stored in at least one buffer during execution of the multi-view function, the display device 100 in FIG. 1 may control an operation of the transmission device 200 transmitting various contents used for the multi-view, thereby enabling the multi-view to be normally provided.

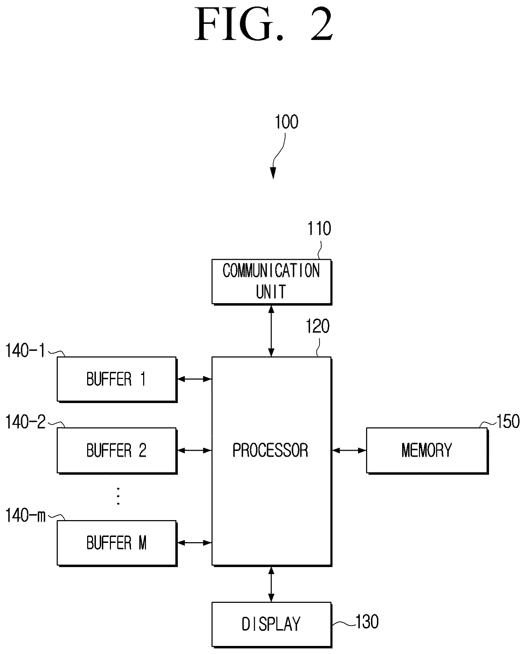

FIG. 2 is a block diagram illustrating a configuration of the display device 100.

Referring to FIG. 2, the display device 100 may include a communication unit 110, a processor 120, a display 130, a plurality of buffers 140-1 to 140-m, and a memory 150.

The communication unit 110 is a component for performing communication with at least one external device. The communication unit 110 may transmit and receive various signals and data to and from the external device by using various wired or wireless communication methods such as Bluetooth, access point (AP)-based wireless fidelity (Wi-Fi, wireless local area network (LAN)), Zigbee, wired/wireless local area network (LAN), wide area network (WAN), Ethernet, IEEE 1394, high-definition multimedia interface (HDMI), universal serial bus (USB), mobile high-definition link (MHL), Audio engineering society/European broadcasting union (AES/EBU) communication, optical communication, or coaxial communication. The communication unit 110 may include an integrated interface for performing communication with the transmission device 200 connected to the plurality of content sources, as illustrated in FIG 1.

The processor 120 is a component for controlling overall operations of the display device 100. The processor 120 may be connected to various components included in the display device 100 and may control operations of the respective components. The processor 120 may include or be defined as one or more of a digital signal processor (DSP), a microprocessor, a graphics processing unit (GPU), an artificial intelligence (AI) processor, a neural processing unit (NPU), a time controller (TCON), a central processing unit (CPU), a microcontroller unit (MCU), a micro processing unit (MPU), a controller, an application processor (AP), or a communication processor (CP), or an ARM processor. In addition, the processor 120 may be implemented as a system-on-chip (SoC) or a large-scale integration (LSI) having a built-in processing algorithm, or as an application specific integrated circuit (ASIC) or a field programmable gate array (FPGA).

Furthermore, the processor 120 may include an artificial intelligence-specific processor. If the processor 120 includes the artificial intelligence-specific processor, the processor 120 may be designed as a hardware chip such as an ASIC or FPGA specialized for processing a specific artificial intelligence model.

Although FIG. 1 illustrates that a single processor 120 and a single memory 150 are implemented as separate components, respectively, each of the processor 120 and the memory 150 may be implemented as a plurality of components. In addition, at least one of the plurality of processors may be implemented in an integrated form with the memory.

The display 130 may be implemented as a display including a self-luminous element, or implemented as a display including a non-self-luminous element and a backlight. For example, the display 130 may be implemented as various types of displays such as a liquid crystal display (LCD), an organic light-emitting diode (OLED) display, a light-emitting diode (LED), a micro LED, a mini LED, a plasma display panel (PDP), a quantum dot (QD) display, and a quantum dot light-emitting diode (QLED). The display 130 may further include a driving circuit implemented as an amorphous silicon thin-film transistor (a-si TFT), a low temperature poly-silicon thin-film transistor (LTPS TFT), or an organic thin-film transistor (OTFT), a backlight unit, and the like.

The plurality of buffers 140-1 to 140-m are memories for temporarily storing data. The processor 120 may perform buffering by temporarily storing data received through the communication unit 110 in at least one of the plurality of buffers 140-1 to 140-m.

The memory 150 is a component for storing various programs, instructions, data, or the like used for the operation of the display device 100. The memory 150 may be implemented as at least one of various types of memories such as a dynamic random access memory (DRAM), a static random access memory (SRAM), a synchronous dynamic random access memory (SDRAM), a one-time programmable read-only memory (OTPROM), a programmable read-only memory (PROM), an erasable and programmable read-only memory (EPROM), an electrically erasable and programmable read-only memory (EEPROM), a mask ROM, a flash ROM, a flash memory, a hard drive, or a solid state drive (SSD).

Although FIG. 2 illustrates only one memory 150, the present disclosure is not limited thereto. The memory 150 may be implemented to include a plurality of memories respectively storing different types of data or data generated at different stages.

The processor 120 may control operations of the various components described above and other components not illustrated in the drawings. The processor 120 may perform various functions based on user manipulation. The term "user manipulation" may refer to an operation in which the user selects various buttons or a touchscreen panel included in the display device 100, selects buttons on a terminal device such as a remote controller or a mobile phone connected to the display device 100 by a wired or wireless connection method, or selects buttons or the like on an infrared (IR) remote controller, or refer to an input signal transmitted through such an operation. The processor 120 may control the display 130 to display a setting screen including various menus, and may execute the multi-view function if the multi-view function is selected on the setting screen.

The multi-view function refers to a function of displaying a plurality of content screens on a single screen. In the present disclosure, a screen including a plurality of content screens by executing the multi-view function is referred to as a "multi-view screen." On the other hand, if the multi-view function is not executed, the display device 100 may basically display a single content screen. In the present disclosure, the single content screen is referred to as a "single-view screen." The multi-view function may also be referred to as a "multi-view mode" or a "split screen function", while the case of displaying the single-view screen may be referred to as a "single-view mode", a "single screen mode", or the like. The display device 100 may execute one of the multi-view function or a single-view function based on user selection. Alternatively, if the user does not set the multi-view function, the display device 100 may be set to be basically operated in the single-view mode.

If the multi-view function is selected, the processor 120 may receive the data of the plurality of contents respectively provided from the plurality of content sources connected to the transmission device 200 through the communication unit 110. The processor 120 may store the received data respectively in the plurality of buffers 140-1 to 140-m.

The processor 120 may generate the plurality of content screens by respectively processing the data stored in the plurality of buffers 140-1 to 140-m. The processor 120 may control the display 130 to display the plurality of content screens on the entire screen.

The number, display positions, or the like of the content screens to be displayed during execution of the multi-view function may be set by default and stored in the memory 150. However, the present disclosure is not necessarily limited thereto, and , and the number, display positions, or the like of the content screens may also vary depending on user settings.

The user may directly select a content source and content during execution of the multi-view function. If the multi-view function is selected, the processor 120 may control the display 130 to display a setting screen for enabling selection of the plurality of content sources 10-1 to 10-n connected to the transmission device 200. If one of the plurality of content sources 10-1 to 10-n is selected, the processor 120 may control the display 130 to display a setting screen for enabling selection of one of the contents available from the selected content source. The user may select the content on the setting screen. If all of the plurality of contents are selected in this manner, the processor 120 may generate a control signal to cause the selected contents to be transmitted from the selected content sources and transmit the control signal to the transmission device 200. The transmission device 200 may receive the contents from the respective content sources based on the control signal, and then transmit the received contents to the display device 100.

Hereinabove, a case where content sources and contents are directly selected for execution of the multi-view function is described. However, the present disclosure is not necessarily limited thereto.

For example, if the number of the plurality of content sources 10-1 to 10-n currently connected to the transmission device 200 is less than or equal to the number of divided screens (that is, the content screens) includable in the multi-view screen, the processor 120 may automatically select the plurality of content sources 10-1 to 10-n without performing a content source selection process. For example, if the multi-view screen includes a total of four content screens and the number of content sources connected to the transmission device 200 is four or fewer, the processor 120 may select all of the content sources connected to the transmission device 200. On the other hand, if the number of content sources connected to the transmission device 200 is five or more, the processor 120 may select four content sources by considering a connection order between the transmission device 200 and the content sources, a priority of each content source, or the like, or may randomly select the content sources.

In addition, the processor 120 may automatically select content without performing the content selection process even if any of the plurality of content sources 10-1 to 10-n provides currently playing or broadcasting content, previously viewed and stopped content, single content, or the like. If the multi-view function is terminated during execution, the processor 120 may store, in the memory 150, information on types of finally played-back contents and content sources thereof.

The processor 120 may also provide, as the multi-view screen based on the user selection, contents from external sources connected to the display device 100 itself other than the transmission device 200. However, descriptions thereof are omitted in the present disclosure.

If content sources and contents to be used for execution of the multi-view function are selected by the user or automatically, the processor 120 may generate information regarding the content sources and contents and a control signal for transmitting the selected contents, and transmit the control signal to the transmission device 200 through the communication unit 110.

If the transmission device 200 receives, from the display device 100, the control signal for transmitting the data of the plurality of content sources, the transmission device 200 may receive data of the selected contents from the selected content sources and then transmit the data to the display device 100.

The processor 120 may store the received data respectively in the plurality of buffers 140-1 to 140-m. The processor 120 may allocate the plurality of buffers 140-1 to 140-m to the respective content sources used for the multi-view function. The term "allocation" refers to designating a buffer for storing data provided from one content source. The processor 120 may sequentially allocate the plurality of buffers 140-1 to 140-m according to an order in which the content sources or contents are selected. However, the present disclosure is not necessarily limited thereto, and the processor 120 may allocate the buffers randomly.

During execution of the multi-view function as described above, the processor 120 may check storage states of the buffers 140-1 to 140-m.

If the processor 120 identifies that a buffer among the plurality of buffers 140-1 to 140-m has a storage level lower than a predetermined reference level, the processor 120 may transmit, to the transmission device 200 through the communication unit 110, a control signal for adjusting a transmission order of the data of the plurality of contents.

The processor 120 may check the storage states of the buffers 140-1 to 140-m at predetermined intervals and identify a buffer having a storage level lower than the reference level by comparing the storage level of the buffer with the reference level. However, the present disclosure is not necessarily limited thereto. In detail, even if an amount of data stored in a buffer is insufficient for data processing, the processor 120 may identify that the storage level of the buffer is lower than the reference level. The processor 120 may also check the storage states of the buffers 140-1 to 140-m as needed if a predetermined event occurs. For example, if an event such as addition of a multi-view screen, change of at least some contents among the multi-view screens, or input of a check command from the user occurs, the processor 120 may compare a storage capacity of each of the buffers 140-1 to 140-m with the reference level or compare the storage capacities of the buffers 140-1 to 140-m with each other.

The control signal transmitted from the processor 120 to the transmission device 200 may include information regarding contents or content sources requiring prioritized transmission, commands for prioritized transmission of data of such contents, or the like. Alternatively, the control signal may include priority information for each of the plurality of contents, commands for transmission of the data according to the priorities.

The processor 120 may perform the above-described operations based on various programs and instructions stored in the memory 150.

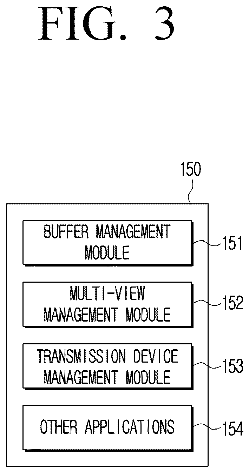

FIG. 3 illustrates an example of a software structure stored in the memory 150. Referring to FIG. 3, the memory 150 may store a buffer management module 151, a multi-view management module 152, a transmission device management module 153, other applications 154, or the like.

The buffer management module 151 is a software module for managing the plurality of buffers 140-1 to 140-m included in the display device 100. The processor 120 may execute the buffer management module 151 to write or read data to or from the plurality of buffers 140-1 to 140-m and to check the storage levels of the plurality of buffers 140-1 to 140-m.

The multi-view management module 152 is a software module for configuring a multi-view screen if the multi-view function is selected. If the user selects the multi-view function, the processor 120 may execute the multi-view management module 152 to provide the multi-view screen as described above.

The transmission device management module 153 is a software module for controlling or managing the transmission device 200. If the transmission device 200 is connected thereto, the processor 120 may execute the transmission device management module 153 to transmit and receive various signals and data to and from the transmission device 200. In addition, the processor 120 may execute various applications 154 stored in the memory 150 to perform various operations.

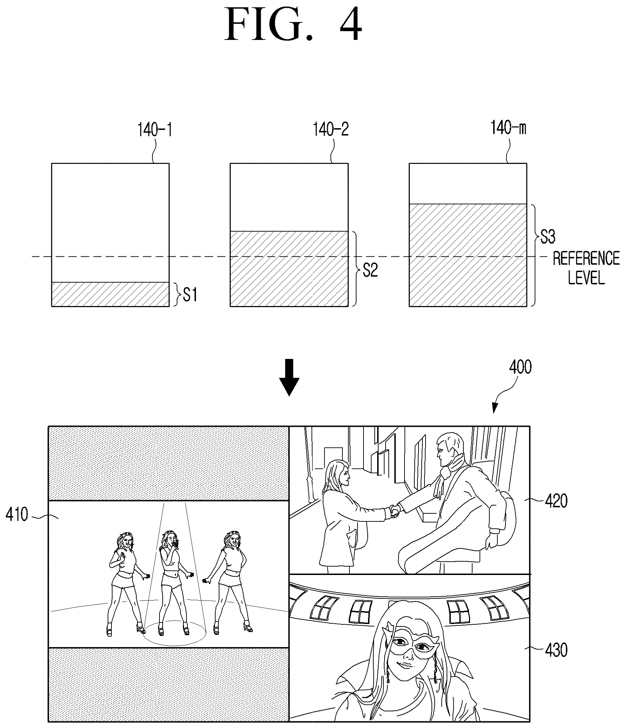

FIG. 4 is a diagram illustrating an operation of the display device.

Referring to FIG. 4, the plurality of buffers 140-1 to 140-m may store data of content provided from the content source allocated to each buffer. The processor 120 may read the data stored in the plurality of buffers 140-1 to 140-m in predetermined processing units and process the read data to generate the plurality of content screens.

FIG. 4 illustrates a case where a multi-view screen 400 including a total of three content screens 410 to 430 is displayed. The processor 120 may check storage levels s1, s2, and s3 of the plurality of buffers 140-1 to 140-m as needed or periodically. FIG. 4 illustrates that one of the buffers 140-1 has the storage level s1 lower than the reference level. The reference level may be set to be greater than or equal to the minimum size of data required for one decoding and rendering operation. If data included in one image frame is read and processed at a time, the minimum size may correspond to the number of bits (or bytes) of data included in the image frame.

The processor 120 may obtain information on the reference level from the memory 150. The same reference level may be set for the plurality of buffers 140-1 to 140-m. However, the present disclosure is not necessarily limited thereto, and the reference levels may be set individually based on characteristics of the content sources or contents respectively allocated to the plurality of buffers 140-1 to 140-m. For example, a relatively higher reference level may be set for a buffer allocated to content having a larger data size required for one rendering operation than other contents.

If the processor 120 identifies that the buffer 140-1 has a storage level lower than the reference level, the processor 120 may generate the control signal for adjusting the transmission order of data of the plurality of contents and transmit the control signal to the transmission device through the communication unit 110. The transmission order may be adjusted in various ways. Hereinafter, examples of the adjusted transmission order will be described in detail.

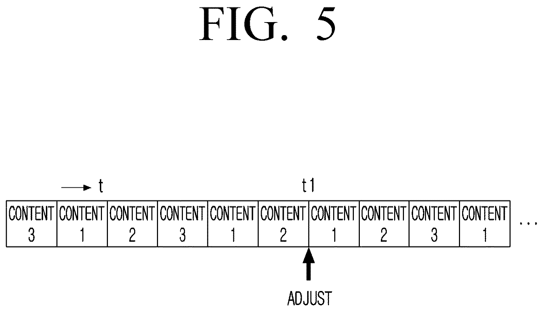

FIGS. 5 to 7 are diagrams illustrating detailed examples of methods of adjusting the transmission order.

FIG. 5 illustrates that the transmission device 200 transmits data in an order of content 3, content 1, and content 2, and the order is adjusted at time t1. The processor 120 may compare the storage levels of the buffers 140-1 to 140-m and transmit, to the transmission device 200 through the communication unit 110, a control signal for adjusting the transmission order to an order in which data from the content source corresponding to a buffer having a lower storage level is transmitted before data from the content source corresponding to a buffer having a higher storage level. As illustrated in FIG. 4, if the storage level s1 of the first content source buffer 140-1 is the lowest, the storage level s2 of the second content source buffer 140-2 is the next lowest, and the storage level s3 of the m-th content source buffer 140-m is the highest, the processor 120 may generate a control signal for transmitting data in the order of content 1, content 2, and content 3.

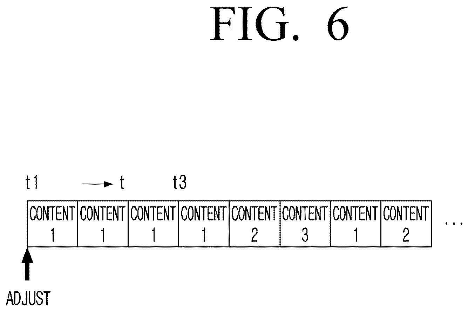

FIG. 6 illustrates a case where the transmission order is adjusted at time t1 so that content 1 is transmitted preferentially for a predetermined period and then the contents are transmitted in a predetermined order. The processor 120 may transmit, to the transmission device 200 through the communication unit 110, a control signal for preferentially transmitting data of the content to be stored in the identified buffer for a predetermined period and then adjusting the transmission order to an order in which data from the content source corresponding to the identified buffer is transmitted before data from the content source corresponding to the remaining buffer, based on the difference between the storage level of the identified buffer and the reference level. FIG. 6 illustrates that content 1 is transmitted from time t1 to time t3, and after time t3, data is transmitted in an order of content 1, content 2, and content 3. Although FIG. 6 illustrates that only content 1 is transmitted three times, a period of prioritized transmission may vary depending on a magnitude of the difference between the storage level and the reference level.

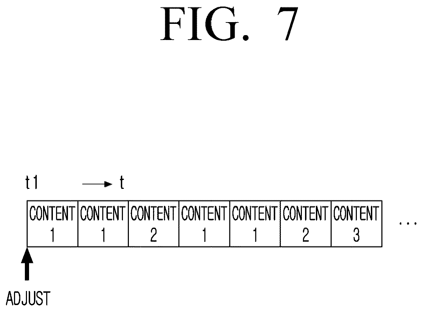

FIG. 7 illustrates another pattern of the transmission order of data. FIG. 7 illustrates a case where the transmission order is adjusted at time t1 to transmit data in an order of content 1, content 1, content 2, content 1, content 1, content 2, and content 3. The processor 120 may set a transmission ratio of content allocated to a buffer having a low storage level to be higher than transmission ratio of contents allocated to other buffers.

In addition, the processor 120 may generate a control signal for transmitting data in various orders or patterns based on the storage states of the buffers, and transmit the control signal to the transmission device 200.

Although the embodiments hereinabove describes that the transmission order of data is adjusted if at least one of the buffers has a storage level lower than the reference level, according to another embodiment, the display device may adjust the transmission order of data based on storage states of the plurality of buffers even if the storage levels are not lower than the reference level.

The processor 120 may compare the storage levels of the plurality of buffers 140-1 to 140-m at predetermined intervals. The processor 120 may transmit, to the transmission device 200 through the communication unit 110, the control signal for adjusting the transmission order of the data of the plurality of contents if a difference between the storage levels of the plurality of buffers 140-1 to 140-m is greater than or equal to a predetermined magnitude even if all the storage levels of the plurality of buffers 140-1 to 140-m are higher than or equal to the reference level.

For example, if a storage level of the first buffer 140-1 is 20% and that of the second buffer 140-2 is 50%, the reference level is set to 10%, and a threshold difference is set to 20%, although both the storage levels of the first and second buffers 140-1 and 140-2 are higher than or equal to the reference level, a difference between the storage levels of the first and second buffers is 30%, which is greater than or equal to the threshold difference, and accordingly, the processor 120 may thus adjust the transmission order of data.

Even if all the buffers have storage levels higher than or equal to the reference level, the processor 120 may adjust the transmission order of the data in the same manner as at least one of the embodiments described above.

In the above-described example, the processor 120 may compare the storage levels of the first buffer 140-1 and the second buffer 140-2, identify the first buffer 140-1 as a buffer having the lowest storage level, and identify the second buffer 140-2 as a buffer having the highest storage level. The processor 120 may adjust the transmission order of the data to an order in which data from the content source corresponding to the first buffer 140-1 having the lowest storage level is received first and data from the content source corresponding to the second buffer 140-2 having the highest storage level is received later. Although the embodiments described above describes the case where each of the plurality of content sources provides one content, at least one of the plurality of content sources may provide a plurality of contents. The transmission device 200 may selectively aggregate the contents of the plurality of content sources and transmits the aggregated contents to the display device 100.

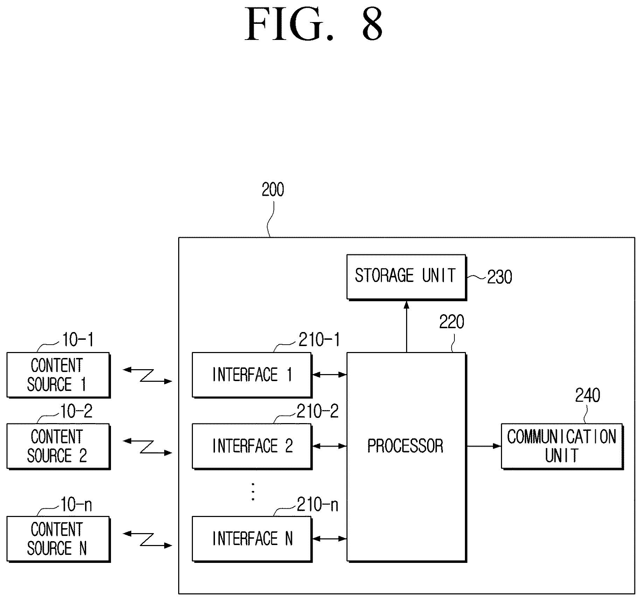

FIG. 8 is a block diagram illustrating a configuration of the transmission device 200 according to at least one embodiment of the present disclosure. Referring to FIG. 8, the transmission device 200 may include a plurality of interfaces 210-1 to 210-n, a processor 220, a storage unit 230, and a communication unit 240.

The transmission device 200 is a device for integrated management of contents of various content sources. If the transmission device 200 is used, the user may check, on one display device 100, the contents provided from the plurality of content sources without directly connecting the plurality of content sources to the display device 100. The transmission device 200 may otherwise be referred to as a source integration device, a media box, a One Connect Box (OC box), or the like, and is referred to as the transmission device 200 in the present disclosure.

The transmission device 200 may receive real-time streaming data or file-type data from various content sources including multimedia playback devices such as a set-top box (STB), a Blu-ray or digital versatile disc (DVD) player, a desktop PC, a laptop PC, a smartphone, a tablet PC, a web server, a cable broadcasting system, or a terrestrial broadcasting system.

The plurality of interfaces 210-1 to 210-n are components for connection to an external device or a cable. The plurality of interfaces 210-1 to 210-n may be respectively connected to the plurality of content sources 140-1 to 140-n. The plurality of interfaces 210-1 to 210-n may include various connection interfaces such as an HDMI port, a USB port, a component video connection port, a composite video connection port, a cable connection port, or a LAN port.

A processor 220 is a component for controlling an operation of the transmission device 200. The processor 220 may store data received through the plurality of interfaces 210-1 to 210-n in the storage unit 230 in predetermined storage units. The processor 220 may be implemented as one or more processors among various types of processors similarly to the processor 120 used in the above-described display device 100, and detailed examples thereof are thus omitted.

The processor 220 may select at least one of the plurality of interfaces 210-1 to 210-n and receive data based on a control signal received from the display device 100, and then store the received data in the storage unit 230. For example, if a control signal for transmitting a TV broadcast signal is received, the processor 220 may select an interface to which a set-top box is connected among the plurality of interfaces 210-1 to 210-n. If the plurality of content sources and contents are selected according to execution of the multi-view function, the processor 220 may select at least one interface to which the selected content source is connected and receive data of the selected content through the interface. If a server device providing a VOD service is connected thereto through a LAN port among the plurality of interfaces 210-1 to 210-n, the processor 220 may transmit information regarding the selected content to the server device, receive data of the corresponding content, and then store the data in the storage unit 230.

The processor 220 may detect, from the storage unit 230, data stored therein in predetermined transmission units, generate a data packet including the detected data, and then transmit the data packet to the display device 100 through the communication unit 240.

The communication unit 240 is a component for performing communication with the display device 100. For example, the communication unit 240 may include an optical cable integrating an audio-video (AV) data transmission/reception cable and a power cable. The optical cable is a component for transmitting and receiving information through an optical fiber including a core and a clad. If the optical cable is used, each of the transmission device 200 and the display device 100 may further include a signal conversion unit for mutually converting electrical signals and optical signals. Such a cable may be referred to as an invisible cable or a magic cable, and is not necessarily limited thereto. The communication unit 240 may include a single cable, is not necessarily limited thereto, and may include the minimum number of interfaces. In another example, the communication unit 240 may transmit and receive signals and data in a wireless manner.

The storage unit 230 is a component for storing various programs, instructions, and data used in the transmission device 200. The storage unit 230 may store data received through the plurality of interfaces 210-1 to 210-n under control of the processor 220. The storage unit 230 may include at least one buffer and other memories. The memory may be implemented as various types of memories similar to the memory 150 of the above-described display device 100, and redundant examples thereof are thus omitted.

If the control signal for transmitting the data of the plurality of contents is received from the display device 100, the processor 220 may detect data included in payload portions among data packets transmitted from the plurality of content sources 10-1 to 10-n, multiplex the detected data, and classify the data into video streams, audio streams, and other data streams. The processor 220 may store each classified stream in a corresponding storage region in the storage unit 230. The processor 220 may sequentially detect, in predetermined units, data from the storage unit 230 according to a predetermined transmission order or a transmission order requested by the display device 100, and may transmit the detected data through the communication unit 240. In the multi-view mode, the processor 220 may classify the plurality of video streams into predetermined units (for example, data units representing at least one image frame), detect the classified data, and then sequentially transmit the detected data. In addition, the processor 220 may transmit an audio stream included in one of the plurality of contents.

According to an embodiment, the processor 220 may decode the detected data and then sequentially transmit the decoded video data according to the above-described transmission order. However, the present disclosure is not necessarily limited thereto, and signal processing such as decoding may be implemented to be performed by the display device 100.

If the control signal for adjusting the transmission order is received from the display device 100 through the communication unit 240, the processor 220 may adjust the transmission order of respective data based on the control signal.

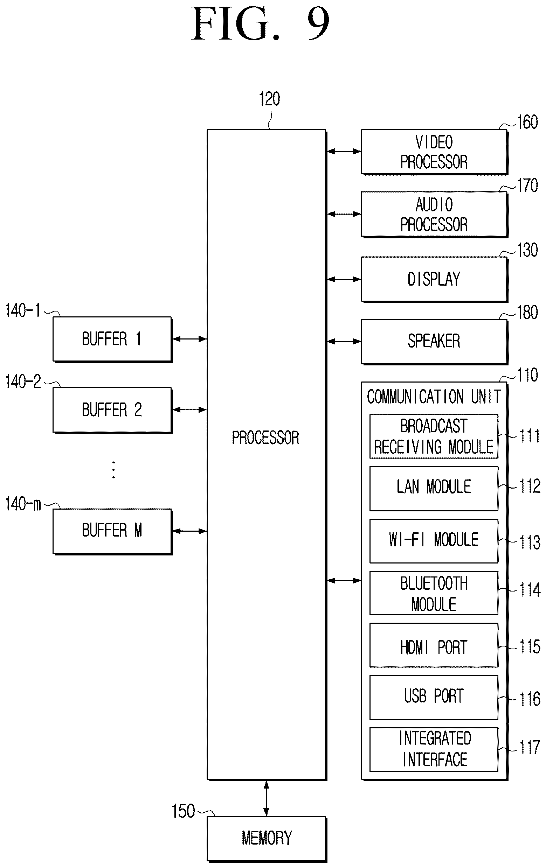

FIG. 9 is a block diagram illustrating an example of a detailed configuration of the display device according to at least one embodiment of the present disclosure.

Referring to FIG. 9, the display device 100 may include the communication unit 110, the processor 120, the display 130, the plurality of buffers 140-1 to 140-m, the memory 150, a video processor 160, an audio processor 170, and a speaker 180. Among the components illustrated in FIG. 9, redundant descriptions of the communication unit 110, the processor 120, the display 130, the plurality of buffers 140-1 to 140-m, and the memory 150 that are the same as those described with reference to FIG. 2 are omitted.

The processor 120 may control the video processor 160 or the audio processor 170 to sequentially detect and process data stored in at least one of the plurality of buffers 140-1 to 140-m.

The video processor 160 may perform various processing operations such as decoding, scaling, and rendering on video data included in each of the plurality of contents.

The audio processor 170 may perform various processing operations such as decoding, noise filtering, and amplification on audio data included in each of the plurality of contents.

In the multi-view mode, the processor 120 may control the video processor 160 to generate the plurality of content screens by respectively processing video data of each of the plurality of contents, and control the audio processor 170 to generate an audio signal by processing audio data of one content selected by the user for listening among the plurality of contents.

The display 130 may display the plurality of content screens generated by the video processor 160 under the control of the processor 120, and the speaker 180 may output the audio signal generated by the audio processor 170 under the control of the processor 120.

The communication unit 110 may include various communication interfaces such as a broadcast receiving module 111, a LAN module 112, a Wi-Fi module 113, a Bluetooth module 114, an HDMI port 115, a USB port 116, and an integrated interface 117.

The broadcast receiving module 111 is a module for receiving broadcast signals through a broadcast signal cable or an external antenna. The LAN module 112 is a module connected to a web server device or the like through the Internet. The Wi-Fi module 113 and the Bluetooth module 114 are modules for respectively performing communication with an external device by using Wi-Fi and Bluetooth methods. The HDMI port 115 is a module for performing communication with an external device by using an HDMI interface method. The USB port 116 is a module connected to a USB connector and connectable to various input means, memory sticks, or external devices. The integrated interface 117 is a component connectable to a cable of the transmission device 200. Although FIG. 9 illustrates the case where the plurality of communication modules or interfaces 111 to 117 are included in the communication unit 110, some components may be added or omitted according to an embodiment, and a plurality of communication interfaces of the same type may be provided.

In addition, although not illustrated in FIG. 9, at least one sensor, at least one power supply unit, or the like may further be included in the communication unit 110. Furthermore, although FIG. 9 illustrates that the video processor 160 and the audio processor 170 are separate components from the processor 120, in some embodiments, at least one processor may be integrated with at least one of the video processor 160 or the audio processor 170.

As described above, although the description describes the processing operations in the case where at least one buffer has a low storage level in the multi-view mode, even in the single-view mode, a storage level of a buffer may decrease due to poor connection between devices, network instability, communication failure, or the like.

In the single-view mode, if the processor 120 determines that the storage level of a buffer storing data of content to be displayed is lower than or equal to the predetermined reference level, the processor 120 may adjust a processing speed of the data stored in the buffer.

For example, if it is determined that the storage level of the first buffer 140-1 is lower than or equal to the reference level, the processor 120 may control the video processor 160 to lower a rendering rate of a content screen corresponding to the first buffer 140-1 to a level such as 0.9, 0.8, or 0.7. The processor 120 may determine the rendering rate in proportion to the difference between the storage level of the buffer and the reference level and directly adjust the level (e.g., from 1.0 to 0.7). However, the present disclosure is not necessarily limited thereto. That is, the processor 120 may gradually lower the rendering rate from the reference value 1.0 to the level such as 0.9, 0.8, or 0.7, and check a degree of recovery of the storage level of the first buffer 140-1. If it is determined that the storage level of the first buffer 140-1 increases while the rendering rate is lowered to 0.9, the processor 120 may control the video processor 160 to maintain the rendering rate of 0.9. On the other hand, if it is determined that the storage level of the first buffer 140-1 further decreases or recovers slowly, the processor 120 may control the video processor 160 to gradually lower the rendering rate to 0.8 or 0.7.

If the storage level changes to be higher than or equal to the reference level while the processing speed is slowed down, the processor 120 may control the video processor 160 to increase the processing speed of the data stored in the buffer. For example, the processor 120 may restore the rendering rate to a reference speed of 1.0. Alternatively, for time synchronization, the processor 120 may temporarily increase the rendering rate to a level higher than the reference speed of 1.0, such as 1.1, 1.2, or 1.3, for a predetermined period, and then adjust the rendering rate back to the original reference speed.

The method of adjusting the processing speed of data as described above may also be applied in the multi-view mode.

Even after adjusting the transmission order of data, if the storage level of a buffer does not increase to the reference level or higher or increases too slowly, the processor 120 may control the video processor 160 to lower the processing speed of data stored in the buffer having a storage level lower than the reference level. If the storage level later increases to be higher than or equal to the reference level, the processor 120 may control the video processor 160 to increase the processing speed of data stored in the buffer. The method of adjusting the processing speed may be the same as that in the single-view mode described above, and redundant descriptions thereof are thus omitted. Although the above-described embodiments describes the case where the processor 120 additionally adjusts the rendering rate after adjusting the transmission order of data in the multi-view mode, according to another embodiment, the processor 120 may perform processing speed adjustment separately from data transmission order adjustment.

If the buffer storage level still does not recover even after the processor 120 performs both the transmission order adjustment operation and the processing speed adjustment operation, the processor 120 may adjust the number of content screens used for the multi-view.

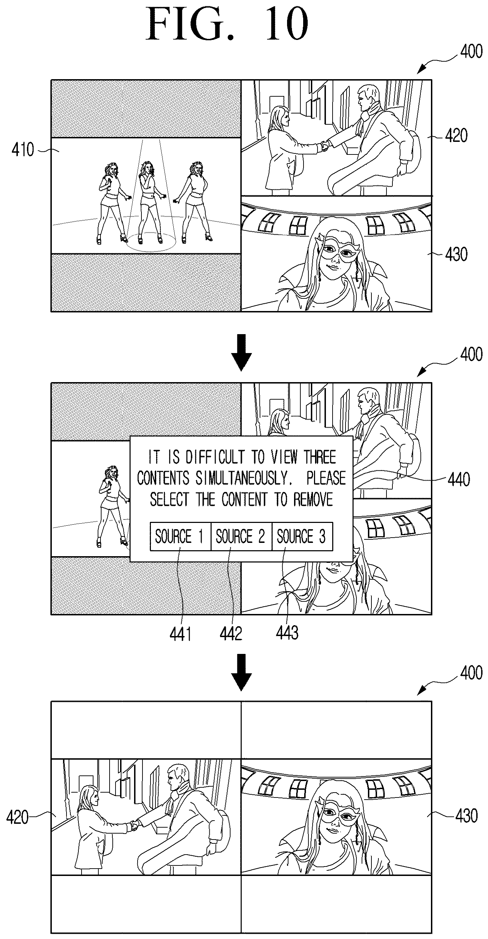

FIG. 10 illustrates an embodiment in which the number of content screens is adjusted.

Referring to FIG. 10, the display device 100 may display the multi-view screen 400. FIG. 10 illustrates the multi-view screen 400 including the three content screens 410, 420, and 430. As described above, the number and layout of the content screens may be set by default or changed based on the user settings.

As described in the above-described embodiments, the processor 120 may compare the storage levels of the buffers 140-1 to 140-m at predetermined intervals after adjusting the transmission order. The processor 120 may reduce the number of content screens included in the multi-view screen 400 if the buffer having a storage level falling below the reference level is re-identified.

The processor 120 may control the display 130 to display a notification message 440 for adjusting the number of content screens. The notification message 440 may include menus 441, 442, and 443 for selecting contents or content sources to be removed. If the user selects one menu, the processor 120 may generate a control signal for stopping transmission of the selected content or content source, and transmit the control signal to the transmission device 200 through the communication unit 110. If the number of contents is reduced in this manner, the transmission device 200 may use a transmission bandwidth more efficiently, thus enabling the display device 100 to sufficiently secure data for each buffer. Accordingly, the display device 100 may display the multi-view screen seamlessly.

FIG. 10 illustrates a state in which the first content screen 410 among the three content screens 410, 420, and 430 is removed.

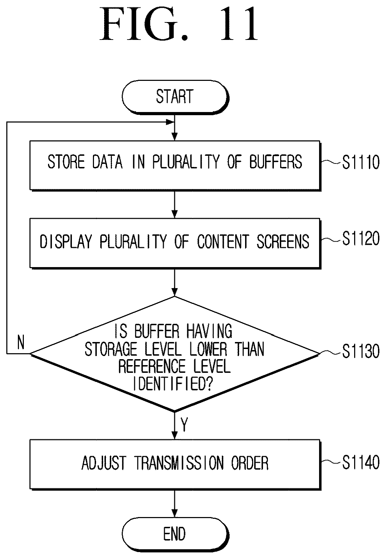

FIG. 11 is a flowchart illustrating a display method for a display device according to at least one embodiment of the present disclosure. FIG. 11 illustrates an operation of the display device in the multi-view mode. The display device may receive data of the contents of the plurality of content sources from the transmission device and stores the data respectively in the plurality of buffers (S1110).

The display device may generate the plurality of content screens by respectively processing the data stored in the plurality of buffers, and display the multi-view screen including the plurality of content screens (S1120).

The display device may transmit, to the transmission device, the control signal for adjusting the transmission order of the data of the plurality of contents (S1140) if a buffer having a storage level lower than the predetermined reference level is identified among the plurality of buffers (S1130). The transmission device may preferentially transmit the data to be stored in the buffer having a storage level lower than the reference level according to the control signal. Various examples of transmission order adjustment are described above in detail with reference to FIGS. 5 to 7, and redundant descriptions thereof are thus omitted. If a buffer whose storage level is lower than the reference level is not identified, the transmission device may maintain a previous transmission order.

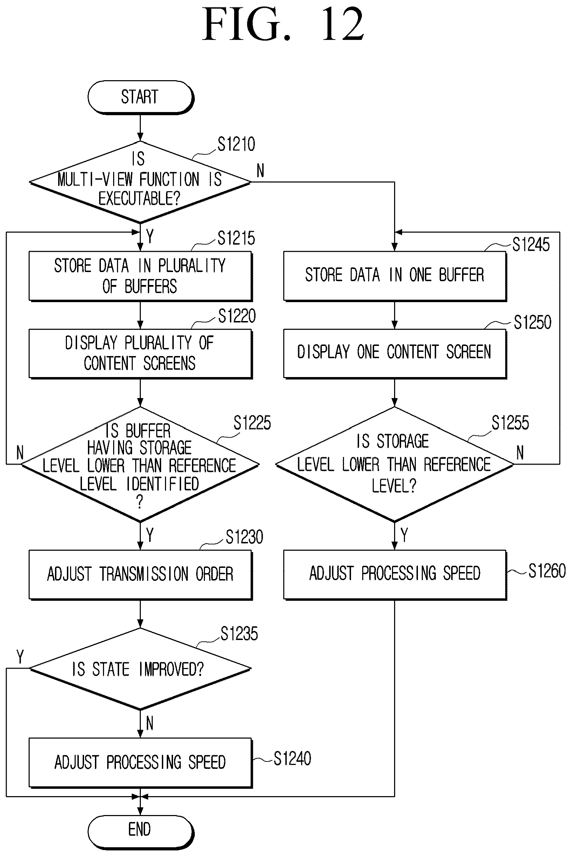

FIG. 12 is a flowchart illustrating a detailed configuration of the display method for a display device according to at least one embodiment of the present disclosure.

Referring to FIG. 12, if the multi-view function is executed (S1210), the display device may transmit the control signal to the transmission device to receive the data of the plurality of contents. The display device may store the received data in the buffers respectively allocated to the contents (S1215). The display device may generate the plurality of content screens by respectively processing the data stored in the respective buffers and then display the same (S1220). If a buffer having a storage level falling to the reference level or lower is identified among the plurality of buffers (S1225), the display device may transmit, to the transmission device, the control signal for adjusting the transmission order (S1230). If the state does not improve even after adjusting the transmission order, the display device may adjust the processing speed of the data stored in the buffer having a low storage level (S1240).

If the multi-view function is not executed, the display device may be basically operated in the single-view mode. In the single-view mode, the display device may receive, from the transmission device, data of one content provided from one content source and store the data in one buffer (S1245). The display device may process the data stored in the buffer to display one content screen (S1250).

If the storage level of the buffer is identified as being lower than the reference level (S1255), the display device may adjust the processing speed of the data stored in the buffer (S1260).

Although the various embodiments have been described above individually or in combination, the respective embodiments are not necessarily required to be implemented individually, and may be entirely or partially combined with at least one other embodiment to be implemented in one apparatus.

In addition, although the above description has been made based on the case where all content sources used for the multi-view function are connected to the transmission device, if another external source is connected to the display device in addition to the transmission device and the user selections to use content provided from the external source for the multi-view function, the display device may also receive data of the content from the external source.

The various embodiments described above may be implemented as software including instructions stored in a machine-readable storage medium (e.g., a computer).

In detail, a program code or instruction may be stored in a non-transitory readable medium and provided for sequentially executing: receiving, from a transmission device connected to a plurality of content sources, data of a plurality of contents respectively provided from the plurality of content sources and storing the data respectively in a plurality of buffers; generating a plurality of content screens by respectively processing the data stored in the plurality of buffers; displaying the plurality of content screens; and controlling the transmission device to adjust a transmission order of the data of the plurality of contents if that a buffer having a storage level lower than a predetermined reference level is identified among the plurality of buffers.

Alternatively, a program code or instruction may also be stored together in the non-transitory readable medium and provided for additionally executing: lowering a processing speed of data stored in a buffer having a storage level lower than the reference level among the plurality of buffers; and increasing the processing speed of the data stored in the buffer if the storage level changes to be higher than or equal to the reference level.

Such a non-transitory readable medium may be mounted in a device capable of invoking instructions from the storage medium and performing operations based on the invoked instructions. Accordingly, if a program or instruction stored in the non-transitory readable medium is executed by the processor, the processor may directly perform various operations described in the embodiments above, or perform such operations or under control of the processor.

The non-transitory computer-readable medium refers to a tangible medium that stores data semi-permanently and is readable by a machine, rather than a medium that semi-permanently stores data such as a register, a cache, or a memory. A specific example of the non-transitory computer-readable medium may include a compact disk (CD), a digital versatile disk (DVD), a hard disk, a Blu-ray disk, a universal serial bus (USB), a memory card, a read-only memory (ROM), or the like.

The instruction may include codes provided or executed by a compiler or an interpreter. The machine-readable storage medium may be provided in the form of a non-transitory storage medium. Here, the term "non-transitory" refers to that the storage medium is tangible without including a signal, and does not distinguish whether data are semi-permanently or temporarily stored on the storage medium.

In addition, according to an embodiment of the present disclosure, the method according to the various embodiments described above may be included and provided in a computer program product. The computer program product may be traded between a seller and a purchaser as a commercial good. The computer program product may be implemented not only in the form of the above-mentioned non-transitory readable recording medium but also as a product distributed online through an application store (e.g., Play Store^{™}). In case of the online distribution, at least a part of the computer program product may be at least temporarily stored or generated in a storage medium such as a memory of a manufacturer server, an application store server, or a relay server.

Although the embodiments according to the present disclosure are illustrated and described as above, the present disclosure is not limited to the above-described specific embodiments, and may be variously modified by those skilled in the art to which the present disclosure pertains without departing from the gist of the present disclosure as claimed in the accompanying claims. These modifications should also be understood to fall within the scope and spirit of the present disclosure.

## Claims

1. A display device comprising:
a plurality of buffers;
a display;
a communication unit configured to perform communication with a transmission device;
a memory storing at least one instruction; and
a processor configured to control an operation of the display device based on the at least one instruction,
wherein the processor is configured to:
receive, from the transmission device through the communication unit, data of a plurality of contents respectively provided from a plurality of content sources connected to the transmission device, and store the data respectively in the plurality of buffers if a multi-view function is selected,
generate a plurality of content screens by respectively processing the data stored in the plurality of buffers;
control the display to display a multi-view screen including the plurality of content screens, and
transmit, to the transmission device through the communication unit, a control signal for adjusting a transmission order of the data of the plurality of contents if a buffer having a storage level lower than a predetermined reference level is identified among the plurality of buffers.

2. The device as claimed in claim 1, wherein the processor is configured to:
transmit, to the transmission device through the communication unit, the control signal for preferentially transmitting data of the content to be stored in the identified buffer for a predetermined period and then adjusting the transmission order to an order in which data from a content source corresponding to the identified buffer is transmitted before data from a content source corresponding to the remaining buffer, based on a difference between the storage level of the identified buffer and the reference level.

3. The device as claimed in claim 1, wherein the processor is configured to:
transmit, to the transmission device through the communication unit, the control signal for adjusting the transmission order to an order in which data from a content source corresponding to a buffer having a lower storage level among the plurality of buffers is transmitted before data from a content source corresponding to a buffer having a higher storage level.

4. The device as claimed in claim 1, wherein the processor is configured to:
lower a processing speed of the data stored in the buffer having a storage level lower than the reference level among the plurality of buffers, and
increase the processing speed of the data stored in the buffer if the storage level changes to be higher than or equal to the reference level.

5. The device as claimed in claim 1, wherein the processor is configured to:
receive, from the transmission device through the communication unit, data of content provided from one content source among the plurality of content sources, and store the data in one buffer among the plurality of buffers to process the data in a single-view mode,
lower a processing speed of the data stored in the buffer if the storage level of the buffer is identified as being lower than the reference level, and
increase the processing speed of the data stored in the buffer if the storage level changes to be higher than or equal to the reference level.

6. The device as claimed in claim 1, wherein the processor is configured to:
identify the buffer having a storage level lower than the reference level by comparing the storage levels of the plurality of buffers with the reference level at predetermined intervals.

7. The device as claimed in claim 1, wherein the processor is configured to:
compare the storage levels of the plurality of buffers with the reference level at predetermined intervals after the transmission order is adjusted, and
reduce the number of the plurality of content screens included in the multi-view screen based on the multi-view function if the buffer having a storage level falling below the reference level is re-identified among the plurality of buffers.

8. The device as claimed in claim 1, wherein the processor is configured to:
compare the storage levels of the plurality of buffers at predetermined intervals, and
transmit, to the transmission device through the communication unit, the control signal for adjusting the transmission order of the data of the plurality of contents if a difference between the storage levels of the plurality of buffers is greater than or equal to a predetermined magnitude even if all of the storage levels of the plurality of buffers are higher than or equal to the reference level.

9. The device as claimed in claim 1, wherein the processor is configured to:
compare the storage levels of the plurality of buffers at predetermined intervals, and
transmit, to the transmission device through the communication unit, the control signal for adjusting the transmission order to an order in which data from a content source corresponding to a buffer having the lowest storage level among the plurality of buffers is transmitted before data from a content source corresponding to a buffer having the highest storage level if a difference between the storage levels of the plurality of buffers is greater than or equal to a predetermined magnitude even if all of the storage levels of the plurality of buffers are higher than or equal to the reference level.

10. A display method for a display device including a plurality of buffers, the method comprising:
receiving, from a transmission device connected to the display device, data of a plurality of contents respectively provided from a plurality of content sources connected to the transmission device, and storing the data respectively in the plurality of buffers;
generating a plurality of content screens by respectively processing the data stored in the plurality of buffers, and displaying a multi-view screen including the plurality of content screens; and
transmitting, to the transmission device, a control signal for adjusting a transmission order of the data of the plurality of contents if a buffer having a storage level lower than a predetermined reference level is identified among the plurality of buffers.

11. The method as claimed in claim 10, wherein the transmitting, to the transmission device, of the control signal for adjusting the transmission order of the data of the plurality of contents comprises:
identifying a difference between the storage level of the identified buffer and the reference level; and
transmitting, to the transmission device, the control signal for preferentially transmitting data of the content to be stored in the identified buffer for a predetermined period and then adjusting the transmission order to an order in which data from a content source corresponding to the identified buffer is transmitted before data from a content source corresponding to the remaining buffer, based on the difference.

12. The method as claimed in claim 10, wherein the transmitting, to the transmission device, of the control signal for adjusting the transmission order of the data of the plurality of contents comprises:
comparing the storage levels of the plurality of buffers; and
transmitting, to the transmission device, the control signal for adjusting the transmission order to an order in which data from a content source corresponding to a buffer having a lower storage level among the plurality of buffers is transmitted before data from a content source corresponding to a buffer having a higher storage level.

13. The method as claimed in claim 10, further comprising:
lowering a processing speed of the data stored in the buffer having a storage level lower than the reference level among the plurality of buffers; and
increasing the processing speed of the data stored in the buffer if the storage level changes to be higher than or equal to the reference level.

14. The method as claimed in claim 10, further comprising:
receiving, from the transmission device, data of content provided from one content source among the plurality of content sources, and storing the data in one buffer among the plurality of buffers to process the data if a single-view mode is initiated;
lowering a processing speed of the data stored in the buffer if the storage level of the buffer is identified as being lower than the reference level; and
increasing the processing speed of the data stored in the buffer if the storage level changes to be higher than or equal to the reference level.

15. A non-transitory computer-readable storage medium storing computer instructions, wherein, if executed by a processor of a display device, the instructions cause the display device to perform the following operations:
receiving, from a transmission device connected to the display device, data of a plurality of contents respectively provided from a plurality of content sources connected to the transmission device, and storing the data respectively in a plurality of buffers;
generating a plurality of content screens by respectively processing the data stored in the plurality of buffers;
displaying a multi-view screen including the plurality of content screens; and
transmitting, to the transmission device, a control signal for adjusting a transmission order of the data of the plurality of contents if a buffer having a storage level lower than a predetermined reference level is identified among the plurality of buffers.
